# DEMANDE DE BREVET EUROPEEN

(11) **EP 3 546 322 A1**
(43) Date de publication de la demande: **02.10.2019**
(21) Numéro de dépôt: 19155719.8
(22) Date de dépôt: 06.02.2019
(51) Int. Cl.: B62D 25/02, B62D 25/06, B62D 27/02, B60R 22/24, B60R 9/058

(54) **DISPOSITIF DE FIXATION D'UNE BARRE DE TOIT SUR UNE CAISSE DE VÉHICULE AUTOMOBILE, VIA UN SUPPORT D'UN ENROULEUR DE CEINTURE DE SECURITÉ**

(30) Priorité: 26.03.2018 FR 1852609
(71) Demandeur: PSA Automobiles SA, 78300 Poissy (FR)
(72) Inventeur: NOIZET, JESSICA, 78960 VOISINS LE BRETONNEUX (FR); LORETTE, FREDERIC, 78960 VOISINS LE BRETONNEUX (FR); PATRON, CYRIL, 91650 BREUX JOUY (FR)

(57) **Abrégé**

L'invention a pour objet une caisse (1) de véhicule automobile équipée de barres de toit (3) longitudinales montées respectivement le long de l'un et l'autre des bords latéraux d'un pavillon (2). Les barres de toit (3) sont fixées par au moins un organe de fixation (14a, 14b) sur le dessus du pavillon (2) via au moins leurs extrémités longitudinales. La caisse (1) est équipée d'organes de renfort affectés au moins au renforcement des fixations respectives des barres de toit (3) sur la caisse (1) via au moins leur extrémité arrière (3a). L'un au moins desdits organes de renfort comprend une plaque (11) et un support (4) d'un enrouleur d'une ceinture de sécurité. Le support (4) est fixé sur la caisse (1) en contrebas du pavillon (2) et la plaque (11) s'étend en interposition et en contact étroit suivant son plan d'extension entre le pavillon (2) et un socle (12) ménagé par le support (4).

## Description

La présente invention relève du domaine des véhicules automobiles et plus particulièrement des modalités de fixation d'une barre de toit sur la caisse d'un véhicule automobile.

Les véhicules automobiles comprennent une caisse ménageant une armature robuste sur laquelle sont installés divers équipements du véhicule. L'armature est revêtue d'un habillage comprenant notamment des panneaux qui sont fixés sur la caisse et qui sont au besoin munis de doublures s'étendant vers l'intérieur de la caisse. De telles doublures peuvent être alors exploitées pour le montage sur la caisse de divers équipements du véhicule.

Plus spécifiquement, la caisse ménage entre autre une toiture du véhicule. A cet effet, la caisse comprend à son sommet des longerons latéraux entretoisés par des traverses qui forment une ossature de toit sur laquelle un pavillon est fixé. L'ossature de toit est fixée, via les longerons et/ou les traverses qui la composent, au sommet de montants latéraux que comprend la caisse et qui sont répartis suivant son extension longitudinale.

Parmi les véhicules automobiles, certains sont équipés de barres de toit pour le transport de charges. Il est courant que de telles barres de toit sont au nombre de deux et sont fixées sur la caisse en étant orientées longitudinalement. Plus particulièrement, les barres de toit sont installées en surplomb et en bordure latérale du pavillon sur lequel elles sont fixées.

Compte tenu de leur destination, la fixation des barres de toit sur la caisse est renforcée selon la masse maximale de la charge que le véhicule est autorisé à transporter via les barres de toit, tel qu'il ressort par exemple du document FR3021930 (RENAULT SAS).

Dans le cadre d'un transport de charge de masse modérée, les barres de toit sont couramment fixées sur le pavillon via leurs extrémités longitudinales. Des organes de renfort sont alors fixés à la caisse et au pavillon, pour renforcer l'ancrage des barres de toit sur la caisse et/ou pour renforcer les zones du pavillon recevant les extrémités des barres de toit.

Cependant l'architecture de la caisse et/ou l'encombrement de son environnement intérieur, notamment à ses côtés latéraux, peuvent rendre difficile à réaliser l'ancrage des barres de toit sur la caisse. A titre indicatif non restrictif, de telles difficultés concernent notamment :
-) l'agencement structurel des organes de renfort, qui est recherché le plus simple possible et/ou d'un encombrement ne faisant pas obstacle à l'installation proche d'autres équipements du véhicule, et cela sans affecter la résistance intrinsèque des organes de renfort et/ou l'ancrage robuste des barres de toit sur la caisse.
-) les modalités de montage des barres de toit sur la caisse via un nombre limité de composants. Il est aussi à tenir compte de la contrainte lié à un environnement de la zone d'ancrage des organes de renfort sur la caisse qui est fréquemment encombré, tel que par exemple par des éléments de carrosserie dédiés à la réception d'autres équipements du véhicule. Il est alors à éviter une complexification des opérations de montage à effectuer, pour faciliter les installations sur la caisse des barres de toit et d'un ou de plusieurs éléments de carrosserie et/ou équipements du véhicule situés dans l'environnement proche des organes de renfort affectés au renforcement des barres de toit.
-) les coûts induits par le renforcement de l'ancrage des barres de toit sur la caisse, qui sont recherchés les plus faibles possibles dans le contexte d'une concurrence économique notoirement sévère dans le domaine automobile. Une telle réduction des coûts concerne tant ceux liés à l'organisation des organes de renfort et/ou à leur obtention, que ceux liés aux opérations à réaliser pour leur montage sur la caisse en corrélation avec le montage des barres de toit sur le pavillon.

Dans ce contexte, la présente invention a pour objet une caisse de véhicule automobile équipée de barres de toit longitudinales qui sont chacune fixées sur les côtés latéraux d'un pavillon, au moins via leurs extrémités longitudinales. Au moins un organe de renfort renforce le pavillon et/ou la fixation des barres de toit sur la caisse. L'invention a aussi pour objet un procédé de fixation d'une barre de toit équipant une caisse de véhicule automobile conforme à l'invention.

L'invention vise à proposer des modalités d'ancrage robuste des barres de toit sur la caisse permettant de surmonter les difficultés précédemment mentionnées et/ou d'obvier aux inconvénients qui peuvent en résulter. A cet effet, il est proposé par l'invention une organisation d'une caisse de véhicule automobile décrite ci-après.

Il est dès à présent précisé certaines notions relatives et des termes qui sont communément admis et utilisés dans le domaine automobile pour décrire un véhicule automobile et/ou ses composants. De tels notions relatives et/ou termes seront dès lors utilisés pour définir l'invention, notamment pour rendre concises les revendications, en étant d'évidence comprises en tant que telles par l'homme du métier sans avoir nécessairement à les préciser à nouveau par la suite.

Les directions d'extension d'un véhicule, et donc de la caisse qu'il comprend, sont communément définies dans un repère orthonormé identifié suivant une direction longitudinale, une direction transversale et une direction verticale. Dans le contexte de l'invention, de telles directions et les notions relatives afférentes sont appliquées à la caisse et/ou à ses composants.

La notion longitudinal est typiquement considérée entre l'avant et l'arrière du véhicule, par rapport à la station du conducteur qui fait face à la direction d'avancement vers l'avant du véhicule. Le véhicule s'étend verticalement, ou autrement dit en élévation, perpendiculairement à son plan de roulage au sol.

Par suite les notions inférieur et supérieur ou autres notions apparentées comme par exemple base et sommet, et/ou sous, dessous et dessus, et/ou surplomb et contrebas par exemple, sont des notions relatives considérées verticalement par rapport au plan de roulage du véhicule. Le véhicule s'étend transversalement entre ses côtés latéraux droit et gauche, considérés par rapport au conducteur en station de conduite du véhicule.

Par ailleurs, la caisse est équipée d'un pavillon qui ménage une toiture du véhicule en étant fixé à une ossature de toit que comprend la caisse. L'ossature de toit comprend typiquement des longerons latéraux entretoisés par des traverses recevant au moins un panneau formant le pavillon.

Des barres de toit longitudinales sont classiquement montées sur le dessus du pavillon au moins en partie le long à ses bords latéraux respectifs. Les côtés latéraux de la caisse sont habillés de custodes formées de panneaux latéraux qui sont potentiellement équipées de doublures disposées et s'étendant plus ou moins vers l'intérieur de la caisse.

La caisse de véhicule automobile de la présente invention s'étend suivant des directions définissant un repère orthonormé, dont une direction longitudinale d'avant en arrière de la caisse, une direction transversale entre des bords latéraux de la caisse, et une direction verticale depuis un plan de roulage de la caisse au sol.

La caisse est équipée de barres de toit longitudinales montées respectivement le long de l'un et l'autre des bords latéraux d'un pavillon. Les barres de toit sont fixées par au moins un organe de fixation sur le dessus du pavillon via au moins leurs extrémités longitudinales. La caisse est aussi équipée d'organes de renfort affectés au moins au renforcement des fixations respectives des barres de toit sur la caisse via au moins leur extrémité arrière.

Dans ce contexte, l'invention est reconnaissable en ce que l'un au moins desdits organes de renfort comprend une plaque et un support d'un enrouleur d'une ceinture de sécurité. Le support est fixé sur la caisse en contrebas du pavillon. La plaque s'étend en interposition et en contact étroit suivant son plan d'extension entre le pavillon et un socle ménagé par le support.

Il est compris que la plaque est par définition une pièce mécanique globalement plane, c'est-à-dire s'étendant essentiellement suivant un plan. En ce qui concerne l'enrouleur d'une ceinture de sécurité, celui-ci est typiquement identifié par l'homme du métier relevant du domaine automobile comme étant un équipement d'un véhicule automobile formant un organe de stockage à dévidoir d'une réserve d'une ceinture de sécurité dédiée au maintien d'un passager sur un siège du véhicule. La ceinture de sécurité est notamment une ceinture de sécurité arrière placé à l'arrière d'un siège, tel qu'un siège arrière disposé à l'arrière d'un siège avant ou tel qu'un siège avant en l'absence de siège arrière.

Autrement dit selon l'invention, le support de l'enrouleur est participant en association avec la plaque à la formation d'un organe de renfort relevant de l'invention, qui est affecté au renforcement de l'ancrage sur la caisse non seulement de l'enrouleur mais aussi de l'une des barres de toit via son extrémité arrière. Il est compris qu'une seule barre toit peut être équipée d'un organe de renfort relevant de l'invention ou que chacune des barres de toit peut être équipée d'un organe de renfort relevant de l'invention.

Le renforcement de l'ancrage sur la caisse de la barre de toit via son extrémité arrière est obtenu performant via le support d'enrouleur. Le support d'enrouleur étant communément existant sur le véhicule, le renforcement de l'ancrage sur la caisse de la barre de toit via son extrémité arrière est aussi obtenu à moindres coûts supplémentaires par rapport aux organes existant sur la caisse, notamment en ce qui concerne le support de l'enrouleur.

Selon une forme de réalisation, le pavillon, la plaque et le socle sont soudés entre eux. Une telle opération de soudage est notamment une opération de soudage électrique par points, et peut avantageusement être effectuée à l'issue du montage de la barre toit sur le pavillon et du montage du support sur la caisse via une doublure de custode tel que visé plus loin.

Selon une forme de réalisation, le socle est formé d'une aile plane qui est intégrée au support et qui s'étend parallèlement à la plaque.

L'intégration du socle au support est réalisée à moindres coûts par mise en forme de l'aile consécutivement à la mise en forme du support par emboutissage ou par moulage par exemple. L'intégration du socle au support confère au socle une robustesse confortant une fixation efficace de la barre de toit sur le pavillon et/ou confortant une résistance du pavillon à l'arrachement.

Selon une forme de réalisation, le support est fixé sur une doublure de custode qui comporte une paroi verticale pourvue à son travers d'une fenêtre de passage d'un caisson que comporte le support. Le caisson ménage une assise de montage de l'enrouleur sur le support.

Selon une forme de réalisation, le support comporte des premières parois d'accostage longitudinal, transversal et vertical contre la doublure de custode. Les premières parois d'accostage sont notamment intégrées au support en bordure du caisson et mises en forme consécutivement à la mise en forme du support.

Le support peut être monté sur la doublure de custode et la doublure de custode peut être montée sur la caisse, indépendamment du montage de la barre de toit sur le pavillon et de leur fixation l'une à l'autre conjointement avec la plaque via ledit au moins un organe de fixation. Une opération de fixation par soudage conjointement du pavillon, de la plaque et du socle peut être ensuite réalisée.

Il en ressort une absence d'interférence entre les opérations de montage d'une part de la barre de toit sur le pavillon et d'autre part du support sur la caisse via la doublure de custode. Une fixation par soudage entre le pavillon, la plaque et le socle peut alors être ensuite réalisée aisément lors d'une opération terminale d'ancrage des barres de toit sur le support.

Selon une forme de réalisation, la doublure de custode comporte en surplomb de la fenêtre au moins une deuxième paroi d'accostage sur une custode dont elle ménage une doublure. Le socle s'étend vers l'intérieur de la caisse en ménageant un débord par rapport à ladite deuxième paroi d'accostage.

Il en ressort une absence d'interférence entre d'une part des opérations de fixation de la doublure de custode sur la custode et/ou du support sur la doublure de custode, et d'autre part l'opération de fixation par soudage conjointement du pavillon, de la plaque et du socle via son débord. La qualité du soudage obtenu est ainsi sécurisée par une limitation à trois du nombre de couches de pièces soudées entre elles, comprenant successivement le pavillon, la plaque et le socle.

Selon une forme de réalisation, un dit organe de fixation prend verticalement appui contre la barre de toit et traverse conjointement le pavillon et la plaque en les fixant les uns aux autres et en émergeant hors de la plaque vers l'intérieur de la caisse en contrebas du socle. Le socle comporte un dégagement débouchant vers l'intérieur de la caisse, le dégagement étant ménagé en bordure d'une extrémité de l'organe de fixation émergeante hors de la plaque vers l'intérieur de la caisse. Le dégagement ménage un couloir de passage de ladite extrémité émergeante de l'organe de fixation lors de l'introduction du caisson à travers la fenêtre depuis l'extérieur de la caisse. Ainsi, l'organe de fixation ne fait pas obstacle à la mise en place du support sur la caisse malgré la fixation préalable entre la barre de toit, le pavillon et la plaque via l'organe de fixation.

Selon une forme de réalisation, l'organe de fixation comprend deux éléments de fixation coopérants entre eux. Un premier dit élément de fixation prend verticalement appui contre la barre de toit et est agencé en fût de réception dans son évidement intérieur d'un deuxième dit élément de fixation qui émerge hors de la plaque vers l'intérieur de la caisse en contrebas du socle.

L'invention a aussi pour objet un procédé de montage de l'une au moins des dites barres de toit sur une caisse de véhicule automobile conforme à l'invention. Le procédé de l'invention comprend dans sa généralité les opérations successives suivantes :
-) une première opération de fixation de l'extrémité arrière de ladite au moins une barre de toit conjointement au pavillon et à la plaque via ledit au moins un organe de fixation, puis
-) une deuxième opération de fixation du support sur la caisse, le socle étant préalablement disposé sous la plaque, puis
-) une troisième opération de soudage entre eux du pavillon, de la plaque et du socle.

Plus particulièrement selon une forme de mise en oeuvre du procédé de l'invention et préalablement à la première opération, le procédé comprend une opération d'installation du support sur la doublure de custode selon laquelle le caisson est introduit par coulissement transversal à travers la dite fenêtre depuis l'extérieur vers l'intérieur de la caisse, jusqu'à mise en butée du support contre la doublure de custode via les premières parois d'accostage et mise en application du socle sous la plaque, ledit dégagement que comporte le socle ménageant un couloir de passage transversal de l'organe de fixation.

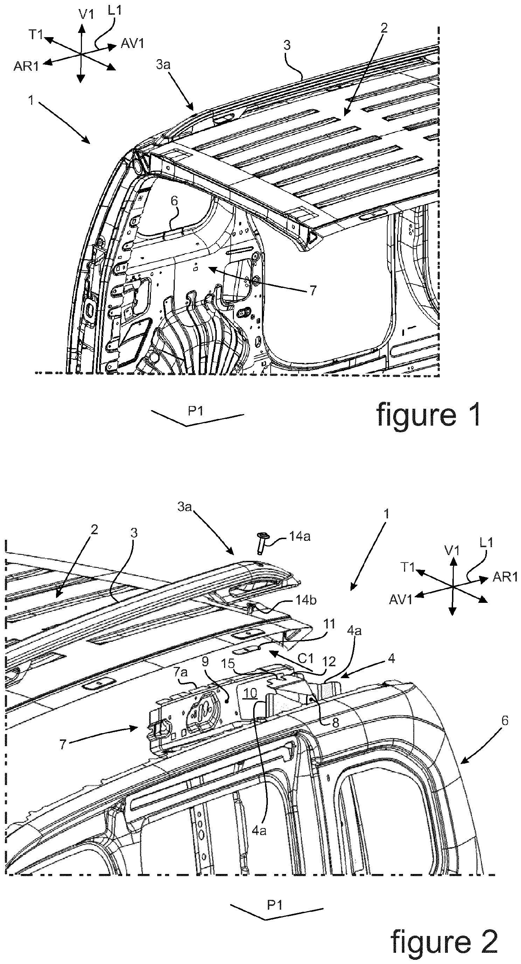

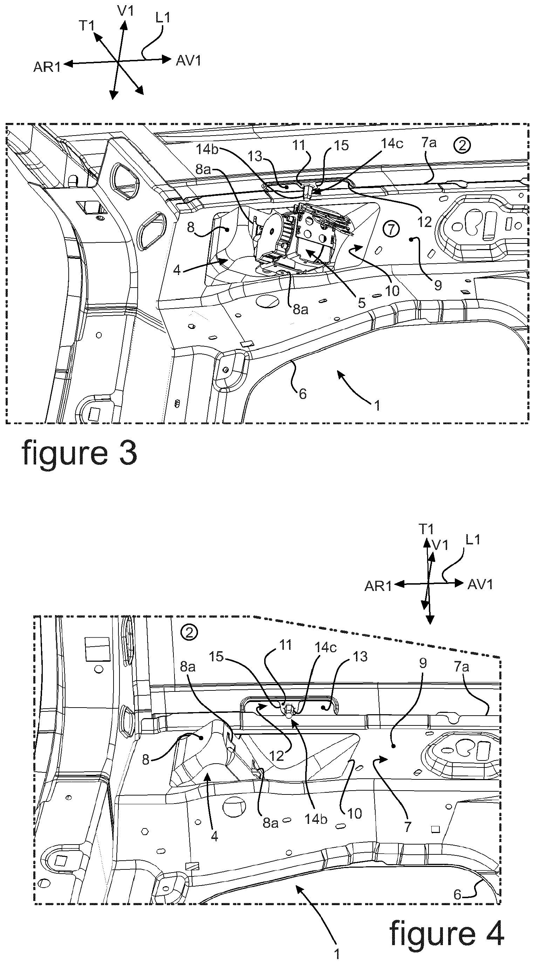

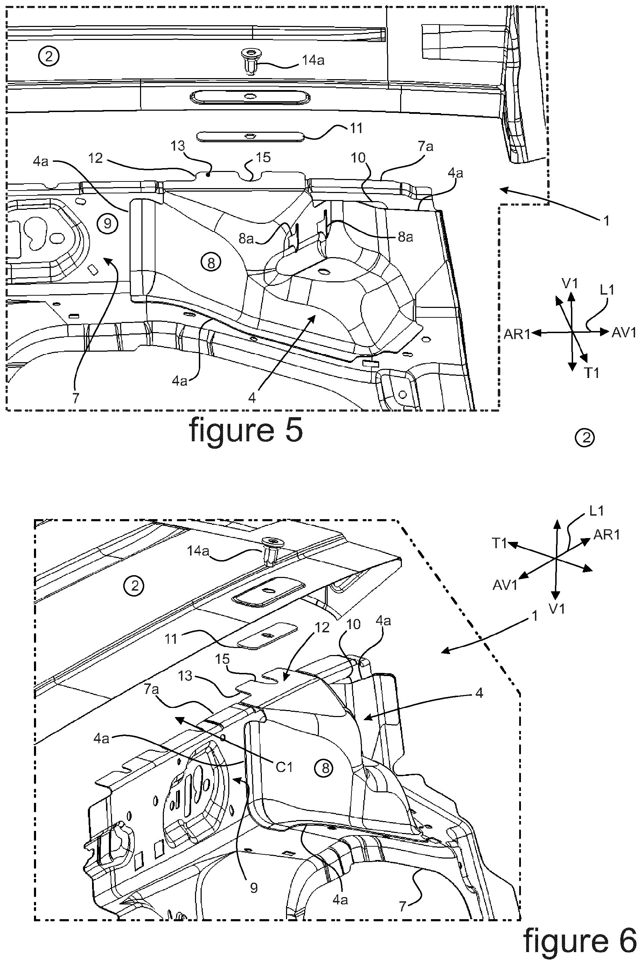

Un exemple de réalisation de la présente invention va être décrit en relation avec les figures des planches annexées, dans lesquelles :
-) la figure 1 est une représentation partielle en perspective arrière d'un exemple de réalisation d'une caisse de véhicule automobile conforme à l'invention, illustrant le contexte de l'invention.
-) la figure 2 est une représentation partielle en perspective éclatée de la partie arrière de la caisse illustrée sur la figure 1, vue de l'extérieur de la caisse.
-) les figures 3 et 4 sont des représentations partielles en perspective de la partie arrière de la caisse illustrée sur la figure 2, vue de l'intérieur de la caisse.
-) les figures 5 et 6 sont des représentations partielles en perspective éclatée de la partie arrière de la caisse illustrée sur les figures 2 à 4, vue respectivement de l'intérieur et de l'extérieur de la caisse.

Les figures et leurs descriptions détaillées exposent l'invention selon des modalités particulières qui ne sont pas restrictives quant à la portée de l'invention telle que définie par les revendications. Les figures et leurs descriptions détaillées d'un exemple de réalisation de l'invention peuvent servir à mieux la définir et/ou à la comprendre, au besoin en relation avec la description générale qui vient d'en être faite.

Sur la figure 1, une caisse 1 de véhicule automobile s'étend longitudinalement L1 d'avant AV1 en arrière AR1, transversalement T1 entre ses côtés droit et gauche et verticalement V1 en élévation depuis son plan de roulage P1. La caisse 1 comprend classiquement un pavillon 2 ménageant une toiture du véhicule. Des barres de toit 3 longitudinales sont fixées sur le pavillon 2 en s'étendant respectivement le long de ses côtés latéraux respectivement droit et gauche. Sur les figures 1 et 2, seule la barre de toit 3 installée au côté gauche du pavillon 2 est représentée. Les barres de toit 3 sont notamment fixées sur le pavillon 2 au moins via leurs extrémités 3a longitudinales.

Dans le cadre de l'invention, il est notamment considéré des modalités de fixation de l'une au moins des barres de toit 3 procurant son ancrage robuste sur la caisse 1, sous contrainte d'un encombrement à l'intérieur de la caisse 1 de l'espace dédié à la fixation sur la caisse 1 de l'extrémité arrière 3a de la barre de toit 3. Un tel encombrement résulte notamment de la présence d'un support 4 ménageant une assise de réception d'un enrouleur 5 d'une ceinture de sécurité.

Plus particulièrement sur la figure 3, la zone intérieure de fixation à la caisse 1 de l'extrémité arrière 3a de la barre de toit 3 est encombrée par le support 4 sur lequel est monté l'enrouleur 5 d'une ceinture de sécurité. Le support 4 est notamment installé à l'intérieur de la caisse 1 en contrebas et à proximité du pavillon 2, ce qui est cause d'une gêne pour organiser un ancrage robuste de l'extrémité arrière 3a de la barre de toit 3 à la caisse 1.

Sur la figure 2, le côté latéral extérieur de la caisse 1 est classiquement équipé d'un panneau latéral dénommé custode 6. La custode 6 est couramment équipée à sa face intérieure d'une doublure de custode 7, qui comporte au moins une deuxième paroi 7a d'accostage vertical à la custode 6. La doublure de custode 7 est mise à profit pour le montage sur la caisse 1 d'un ou de plusieurs équipements du véhicule, dont notamment l'enrouleur 5 dans le cadre de l'invention. A cet effet, le support 4 est fixé à la doublure de custode 7 pour procurer un montage robuste de l'enrouleur 5 sur la caisse 1.

Sur les figures 2 à 6, le support 4 comporte un caisson 8 qui ménage une assise de réception de l'enrouleur 5 et qui est muni d'organes de maintien 8a de l'enrouleur 5 fermement sur le support 4. La doublure de custode 7 comporte une paroi verticale 9 à travers laquelle est ménagée une fenêtre 10 pour le passage du caisson 8 à son travers transversalement T1 depuis l'extérieur vers l'intérieur de la caisse 1. Le support 4 comporte des premières parois 4a d'accostage et de fixation sur la doublure de custode 7, longitudinalement L1, transversalement T1 et verticalement V1, par soudage notamment.

L'extrémité arrière 3a de la barre de toit 3 est fixée à la caisse 1 via un organe de renfort associant une plaque 11 et ledit support 4. La plaque 11 est interposée dans son plan entre le pavillon 2 et un socle 12 ménagé par le support 4. Le socle 12 est notamment formé d'une aile plane qui est intégrée au support 4 et qui s'étend parallèlement à la plaque 11 et au pavillon 2. Le pavillon 2, la plaque 11 et le socle 12 sont conjointement fixés entre eux, notamment par soudage.

La deuxième paroi 7a d'accostage est ménagée au dessus de la fenêtre 10. Une telle disposition de la deuxième paroi 7a d'accostage est susceptible de faire obstacle au soudage entre eux du pavillon 2, de la plaque 11 et du socle 12. Pour obvier à cette difficulté, le socle 12 s'étend vers l'intérieur de la caisse 1 en débord de ladite deuxième paroi 7a d'accostage. Un tel débord 13, visible sur les figures 3, 4 et 6, est exploité pour réaliser le soudage du socle 12 avec la plaque 11 et le pavillon 2, selon trois couches de pièces soudées entre elles pour sécuriser la fixation par soudage obtenue.

Par ailleurs, l'extrémité arrière 3a de la barre de toit 3 est fixée conjointement au pavillon 2 et à la plaque 11 via un organe de fixation 14a, 14b. Comme visible sur la figure 2, l'organe de fixation 14a, 14b est constitué de deux éléments de fixation 14a, 14b coaxiaux coopérant entre eux, notamment par vissage. Un premier élément de fixation 14a supérieur est destiné à prendre appui sur la barre de toit 3 et est agencé en fût de réception par vissage d'un deuxième élément de fixation 14b inférieur destiné à prendre appui contre la plaque 11.

Comme visible sur les figures 3 et 4, l'organe de fixation 14a, 14b est émergeant hors de la plaque 11 vers l'intérieur de la caisse 1. Plus particulièrement, une extrémité du deuxième élément de fixation 14b émerge hors de la plaque 11 vers l'intérieur de la caisse 1, pour permettre une prise du deuxième élément de fixation 14b par un opérateur depuis l'intérieur de la caisse 1 afin d'opérer le vissage l'un à l'autre des éléments de fixation 14a, 14b composant l'organe de fixation 14a, 14b.

Cependant, ladite extrémité émergeante 14c de l'organe de fixation 14a, 14b hors de la plaque 11 vers l'intérieur de la caisse 1 est dès lors placée sur le trajet parcouru par le socle 12 lors d'une introduction par coulissement transversal C1 du caisson 8 que comprend le support 4 à travers la fenêtre 10 depuis l'extérieur vers l'intérieur de la caisse 1.

Pour éviter que ladite extrémité émergeante 14c de l'organe de fixation 14a, 14b constitue un obstacle à l'installation du support 4 sur la doublure de custode 7, le socle 12 comporte un dégagement 15 formé d'une échancrure. Le dégagement 15 débouche au bord longitudinal du socle 12 orienté vers l'intérieur de la caisse 1, en ménageant un couloir à travers lequel l'extrémité émergeante 14c de l'organe de fixation 14a, 14b peut circuler lors de la mise en place du support 4 sur la doublure de custode 7 par approche transversale T1 du support vers la doublure de custode 7.

Pour son ancrage sur la caisse 1, l'extrémité arrière 3a de la barre de toit 3 est fixée au pavillon 2 et à la plaque 11 via l'organe de fixation 14a, 14b. Puis le support 4 est approché de la doublure de custode 7 pour introduire par coulissement transversal C1 (figures 2, 6) le caisson 8 à travers la fenêtre 10 de la doublure de custode 7, jusqu'à mise en butée du support 4 contre la doublure de custode 7 via les premières parois 4a d'accostage. Le support 4 est alors fixé à la doublure de custode 7 par soudage via les premières parois 4a d'accostage. Puis le pavillon 2, la plaque 11 et le socle 12 sont soudés entre eux.

On notera que les dispositions prévues par l'invention pour former l'organe d'ancrage conjointement par la plaque 11 et par le support 4 est susceptible d'être appliquée aux extrémités arrière de l'une et l'autre des barres de toit 3 droit et gauche équipant la caisse 1.

Selon la forme de réalisation illustrée prenant notamment en compte une position de l'enrouleur 5 proche du pavillon 2, l'invention est notamment applicable à la formation de l'organe d'ancrage par la plaque 11 et par un support 4 d'un enrouleur 5 d'une ceinture de sécurité arrière équipant un siège transversalement T1 médian du véhicule. Selon l'exemple de réalisation illustré, le support 4 est exploité pour l'ancrage sur la caisse 1 de l'extrémité arrière 3a de la barre de toit 3 s'étendant le long du côté latéral gauche du pavillon 2.

## Revendications

1. Caisse (1) de véhicule automobile s'étendant suivant des directions définissant un repère orthonormé, dont une direction longitudinale d'avant en arrière de la caisse (1), une direction transversale entre des bords latéraux de la caisse (1), et une direction verticale depuis un plan de roulage de la caisse (1) au sol, la caisse (1) étant équipée de barres de toit (3) longitudinales montées respectivement le long de l'un et l'autre des bords latéraux d'un pavillon (2), les barres de toit (3) étant fixées par au moins un organe de fixation (14a, 14b) sur le dessus du pavillon (2) via au moins leurs extrémités longitudinales, la caisse (1) étant équipée d'organes de renfort affectés au moins au renforcement des fixations respectives des barres de toit (3) sur la caisse (1) via au moins leur extrémité arrière (3a), **caractérisée en ce que** l'un au moins desdits organes de renfort comprend une plaque (11) et un support (4) d'un enrouleur (5) d'une ceinture de sécurité, le support (4) étant fixé sur la caisse (1) en contrebas du pavillon (2) et la plaque (11) s'étendant en interposition et en contact étroit suivant son plan d'extension entre le pavillon (2) et un socle (12) ménagé par le support (4).

2. Caisse (1) de véhicule automobile selon la revendication 1, **caractérisée en ce que** le pavillon (2), la plaque (11) et le socle (12) sont soudés entre eux.

3. Caisse (1) de véhicule automobile selon l'une quelconque des revendications 1 à 2, **caractérisée en ce que** le socle (12) est formé d'une aile plane qui est intégrée au support (4) et qui s'étend parallèlement à la plaque (11).

4. Caisse (1) de véhicule automobile selon l'une quelconque des revendications 1 à 3, **caractérisée en ce que** le support (4) est fixé sur une doublure de custode (7) qui comporte une paroi verticale (9) pourvue à son travers d'une fenêtre (10) de passage d'un caisson (8) que comporte le support (4) et qui ménage une assise de montage de l'enrouleur (5) sur le support (4).

5. Caisse (1) de véhicule automobile selon la revendication 4, **caractérisée en ce que** le support (4) comporte des premières parois (4a) d'accostage longitudinal, transversal et vertical contre la doublure de custode (7).

6. Caisse (1) de véhicule automobile selon l'une quelconque des revendications 4 et 5, **caractérisée en ce que** la doublure de custode (7) comporte en surplomb de la fenêtre (10) au moins une deuxième paroi (7a) d'accostage sur une custode (6) dont elle ménage une doublure, le socle (12) s'étendant vers l'intérieur de la caisse (1) en ménageant un débord (13) par rapport à ladite deuxième paroi (7a) d'accostage.

7. Caisse (1) de véhicule automobile selon l'une quelconque des revendications 1 à 6, **caractérisée en ce qu'**un dit organe de fixation (14a, 14b) prend verticalement appui contre la barre de toit (3) et traverse conjointement le pavillon (2) et la plaque (11) en les fixant les uns aux autres et en émergeant hors de la plaque (11) vers l'intérieur de la caisse (1) en contrebas du socle (12), le socle (12) comportant un dégagement (15) débouchant vers l'intérieur de la caisse (1) qui est ménagé en bordure d'une extrémité (14c) de l'organe de fixation (14a, 14b) émergeante hors de la plaque (11) vers l'intérieur de la caisse (1).

8. Caisse (1) de véhicule automobile selon l'une quelconque des revendications 1 à 7, **caractérisée en ce que** l'organe de fixation (14a, 14b) comprend deux éléments de fixation coopérants entre eux, dont un premier élément de fixation (14a) qui prend verticalement appui contre la barre de toit (3) et qui est agencé en fût de réception dans son évidement intérieur d'un deuxième élément de fixation (14b) qui émerge hors de la plaque (11) vers l'intérieur de la caisse (1) en contrebas du socle (12).

9. Procédé de montage de l'une au moins des dites barres de toit (3) sur une caisse (1) de véhicule automobile selon l'une quelconque des revendications 1 à 8, **caractérisé en ce qu'**il comprend les opérations successives suivantes :
-) une première opération de fixation de l'extrémité arrière (3a) de ladite au moins une barre de toit (3) conjointement au pavillon (2) et à la plaque (11) via ledit au moins un organe de fixation (14a, 14b), puis
-) une deuxième opération de fixation du support (4) sur la caisse (1), le socle (12) étant préalablement disposé sous la plaque (11), puis
-) une troisième opération de soudage entre eux du pavillon (2), de la plaque (11) et du socle (12).

10. Procédé selon la revendication 9, de montage de l'une au moins des dites barres de toit (3) sur une caisse (1) de véhicule automobile conforme à la revendication 7, **caractérisé en ce que** préalablement à la première opération, le procédé comprend une opération d'installation du support (4) sur la doublure de custode (7) selon laquelle le caisson (8) est introduit par coulissement transversal à travers la dite fenêtre (10) depuis l'extérieur vers l'intérieur de la caisse (1), jusqu'à mise en butée du support (4) contre la doublure de custode (7) via les premières parois (4a) d'accostage et mise en application du socle (12) sous la plaque (11), ledit dégagement (15) que comporte le socle (12) ménageant un couloir de passage transversal de l'organe de fixation (14a, 14b).
